(19) Europäisches Patentamt

European Patent Office

Office européen des brevets

(11) **EP 0 412 370 B2**

(12) **NEUE EUROPÄISCHE PATENTSCHRIFT**

(45) Veröffentlichungstag und Bekanntmachung des Hinweises auf die Entscheidung über den Einspruch:
**07.08.1996 Patentblatt 1996/32**

(51) Int Cl.6: **C08L 101/00**, C08L 51/04, C08L 23/16

(45) Hinweis auf die Patenterteilung:
**29.12.1993 Patentblatt 1993/52**

(21) Anmeldenummer: **90114412.1**

(22) Anmeldetag: **27.07.1990**

(54) **ABS-Formmassen mit verbesserter Streckspannung**

ABS mouldings with improved tensile stress

Masses à mouler à partir d'ABS avec une contrainte de traction modifiée

(84) Benannte Vertragsstaaten:
**DE ES FR GB IT**

(30) Priorität: **09.08.1989 DE 3926275**

(43) Veröffentlichungstag der Anmeldung:
**13.02.1991 Patentblatt 1991/07**

(73) Patentinhaber: **BAYER AG**
**51368 Leverkusen (DE)**

(72) Erfinder:
• **Eichenauer, Herbert, Dr.**
  **D-4047 Dormagen (DE)**
• **Pischtschan, Alfred, Dr.**
  **D-5967 Kürten (DE)**
• **Ott, Karl-Heinz, Dr.**
  **D-5090 Leverkusen 1 (DE)**

(56) Entgegenhaltungen:
EP-A- 0 264 721          DE-A- 2 940 804
GB-A- 2 141 432

**Beschreibung**

ABS-Polymerisate sind Chemiewerkstoffe, die sich durch ausgewogene Zähigkeit, Wärmeformbeständigkeit, Verarbeitbarkeit und Oberflächenqualität auszeichnen. Verbessert man eine Eigenschaft, z.B. die Zähigkeit oder die Wärmeformbeständigkeit, dann hat dies in aller Regel Einbußen bei anderen Eigenschaften zur Folge.

Ein besonderes Problem stellt die Herstellung von ABS-Werkstoffen mit guter Zähigkeit hoher Streckspannung und guter Verarbeitbarkeit dar: Die zur Steigerung der Zähigkeit geeigneten Maßnahmen wie Erhöhung des Pfropfkautschukgehalts oder des Molekulargewichts der Styrol/Acrylnitril-Copolymer-Harzmatrix führen gleichzeitig zu einer starken Abnahme der Steifigkeit bzw. zu einer deutlich schlechteren thermoplastischen Verarbeitbarkeit infolge einer starken Erhöhung der Schmelzviskosität.

In der EP-A-0 264 721 sind Formmassen enthaltend Pfropfpolymere, die Ethylen-Propylen-Dien Kautschuk aufweisen, offenbart.

Der in EP-A 6521 vorgeschlagene Zusatz von geringen Mengen Silikonöl zur Verbesserung der Zähigkeit führt im Zugversuch zu deutlicher Verschlechterung der Streckspannung, wodurch beim Entformen entsprechender, durch Spritzguß hergestellter Formteile leicht Weißverfärbungen auftreten können.

Es wurde gefunden, daß ABS-Werkstoffe mit guter Zähigkeit, leichter Verarbeit barkeit sowie hoher Streckspannung unter Erhaltung der sonstigen für ABS-Polymerisate charakteristischen Eigenschaften durch Zusatz spezieller Co- bzw. Terpolymerisate erhalten werden.

Gegenstand der Erfindung sind thermoplastische Formmassen, enthaltend

A) 5-95 Gew.-%, bevorzugt 10-90 Gew.-% und besonders bevorzugt 20-75 Gew.-%, thermoplastisches Homo-, Co- oder Terpolymerisat von Styrol, $\alpha$-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus

B) 5 - 95 Gew.-%, bevorzugt 10 - 90 Gew.-% und besonders bevorzugt 25 - 80 Gew.-%, Pfropfpolymerisat von

B.1) 5 - 90 Gew.-Teilen, vorzugsweise 30 - 80 Gew.-Teilen, Styrol, $\alpha$-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus auf

B.2) 95-10 Gew.-Teile, vorzugsweise 70-20 Gew.-Teile, eines Dien-Kautschuks und

C) 0,1-10 Gew.-Teile, vorzugsweise 0,5-7,5 Gew.-Teile und besonders bevorzugt 0,75-5 Gew.-Teile pro 100 Gew.-Teile A + B eines oder mehrerer EPM und/oder EPDM-Kautschuke.

Die erfindungsgemäßen Mischungen können die üblichen Zusatzstoffe wie Flammschutzmittel, Stabilisatoren, Entformungsmittel, Pigmente, Gleitmittel, Antistatika, Füllstoffe in den üblichen Mengen enthalten.

Durch den Zusatz des Kautschuks C) werden Formmassen vom ABS-Typ erhalten, die neben guter Zähigkeit und leichter Verarbeitbarkeit eine hohe Streckspannung aufweisen.

Dies bedeutet daß aus den erfindungsgemäßen Formmassen leicht durch thermoplastische Verarbeitung zähe Spritzgußteile hergestellt werden können, die beim Entformen keine Weißverfärbung zeigen.

Erfindungsgemäß geeignete thermoplastische Polymerisate A) sind solche aus Styrol, $\alpha$-Methylstyrol, p-Methylstyrol, Vinyltoluol, Halogenstyrol, Methylacrylat, Methylmethacrylat, Acrylnitril, Maleinsäureanhydrid, N-substituiertes Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, $\alpha$-Methylstyrol/Acrylnitril-Gemischen, Styrol/$\alpha$-Methylstyrol/Acrylnitril-Gemischen, $\alpha$-Methylstyrol/Methylmethacrylat/Acrylnitril-Gemischen, Styrol/$\alpha$-Methylstyrol/Methylmethacrylat-Gemischen, Styrol/$\alpha$-Methylstyrol/Methylmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ von 20.000 bis 200.000 bzw. Grenzviskositäten $[\eta]$ von 20 bis 110 ml/g (gemessen in Dimethylformamid bei 25°C).

Zur Herstellung der Pfropfpolymerisate B) geeignete Kautschuke sind insbesondere Polybutadien, Butadien/Styrol-Copolymerisate, Butadien/Acrylnitril-Copolymerisate, und Polyisopren.

Die Kautschuke liegen im Pfropfpolymerisat B) in Form wenigstens partiell vernetzter Teilchen eines mittleren Teilchendurchmessers von $(d_{50})$ 0,05 bis 20,0 μm, bevorzugt von 0,1 bis 2,0 μm und besonders bevorzugt von 0,1 bis 0.8 μm, vor. Der mittlere Teilchendurchmesser $d_{50}$ wird ermittelt durch Ultrazentrifugenmessungen nach W. Scholtan et al., Kolloid-Z. u.Z. Polymere 250 (1972), 782 - 796.

Die Pfropfpolymerisate B) können durch radikalische Pfropfpolymerisation der Monomeren B.1) in Gegenwart der zu pfropfenden Kautschuke B.2) hergestellt werden.

Bevorzugte Herstellungsverfahren für die Pfropfpolymerisate B) sind Emulsions-, Lösungs-, Masse- oder Suspensionspolymerisation sowie bekannte Kombinationen aus diesen Verfahren. Besonders bevorzugte Pfropfpolymerisate B) sind die sogenannten ABS-Polymerisate.

Als C) sind Kautschuke geeignet, die aus Ethylen, Propylen und vorzugsweise zusätzlich einem nichtkonjugierten Dien aufgebaut sind. Als nichtkonjugierte Diene seien z.B. Dicyclopentadien, Ethylidennorbornen, 1,4-Hexadien, 1,4-Cycloheptadien, 1,5-Cyclooctadien genannt.

Das Molverhältnis Ethylen : Propylen ist vorzugsweise 5:1 bis 1:3; das Dien ist in solchen Mengen eingebaut, daß 0 bis 20 Doppelbindungen pro 1.000 C-Atome, vorzugsweise 4 bis 16 Doppelbindungen pro 1.000 C-Atome, resultieren.

Die Kautschuke können amorph, teilkristallin oder kristallin vorliegen. Die Kautschuke werden im allgemeinen durch Ziegler-Natta-Polymerisation hergestellt; sie sind als EPM-Kautschuke bzw. EPDM-Kautschuke bekannt.

Besonders bevorzugte Mischungen bestehen aus

A': 90-20 Gew.-% thermoplastischem Harz aus 5-40 Gew.-Teilen Acrylnitril und 95 - 60 Gew.-Teilen Styrol, $\alpha$-Methylstyrol, p-Methylstyrol, Methylmethacrylat oder Mischungen daraus
B') 10-80 Gew.-% Pfropfpolymerisat von 30-80 Gew.-Teilen Styrol, $\alpha$-Methylstyrol, p-Methylstyrol, Methylmethacrylat, Acrylnitril oder Mischungen daraus auf 70-20 Gew.-Teile Polybutadien und
C) 0,5-5 Gew.-Teile pro 100 Gew.-Teile A+B eines oder mehrerer EPDM-Kautschuke.

Die erfindungsgemäßen Mischungen, enthaltend A), B) und C) und gegebenenfalls die üblichen Zusatzstoffe wie Gleitmittel, Stabilisatoren, Pigmente, Entformungsmittel, Antistatika, Füllstoffe, werden hergestellt, indem man die Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der Erfindung können zur Herstellung von Formkörpern jeder Art verwendet werden, wobei übliche Herstellungsweisen benutzt werden können, insbesondere können Formkörper durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

Beispiele

Polymerkomponenten

Thermoplastisches Harz A

Statistisches Styrol/Acrylnitril 72: 28 - Copolymerisat mit einem $\overline{M}_w$ von ca. 115.000 und einer Uneinheitlichkeit $\overline{M}_w/\overline{M}_n$ - 1 $\leqq$ 2,0.

Pfropfpolymerisat- B1

Pfropfprodukt erhalten durch Emulsionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0,4 μm. Aufarbeitung durch Koagulation des Latex mit einer Essigsäure/Magnesiumsulfat-Mischung und anschließende Trocknung im Vakuum.

Pfropfpolymerisat-B2

Pfropfprodukt erhalten durch Emulsionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0,1 μm. Aufarbeitung wie unter B1 beschrieben.

Kautschuk C1

EPDM-Kautschuk Buna AP 251 (Buna-Werke Hüls), Ethylengehalt 50 Gew.-%, Dien: Ethylidennorbornen, Doppelbindungsgehalt/1.000 C-Atome = 14, Mooney-Viskosität ML (1+4) 100° C = 45.

Kautschuk C2

EPDM-Kautschuk Buna AP 321 (Buna-Werke Hüls), Ethylengehalt 50 Gew.-%, Dien: Dicyclopentadien, Doppelbindungsgehalt/1.000 C-Atome = 8, Mooney-Viskosität ML (1+4) 100° C = 60.

Kautschuk C3

EPDM-Kautschuk Buna AP 331 (Buna-Werke Hüls), Ethylengehalt 50 Gew.-%, Dien: Ethylidennorbornen, Doppelbindungsgehalt/1.000 C-Atome = 4, Mooney-Viskosität ML (1+4) 100° C = 70.

Kautschuk C4

EPDM-Kautschuk Buna AP 447 (Buna-Werke Hüls), Ethylengehalt 70 Gew.-%, Dien: Ethylidennorbornen, Doppelbindungsgehalt/1.000 C-Atome = 8, Mooney-Viskosität ML (1+4) 100° C = 85.

Kautschuk C5

EPDM-Kautschuk Buna AP 521 (Buna-Werke Hüls), Ethylengehalt 50 Gew.-%, Dien: Dicyclopentadien, Doppelbindungsgehalt/1.000 C-Atome = 8, Mooney-Viskosität ML (1+4) 100° C = 100.

Kautschuk C6

EPDM-Kautschuk Buna AP 541 (Buna-Werke Hüls), Ethylengehalt 50 Gew.-%, Dien: Ethylidennorbornen, Doppelbindungsgehalt/1.000 C-Atome = 8, Mooney-Viskosität ML (1+4) 100° C = 110.

A), B), C) wurden zusammen mit 2 Gew.-Teilen Ethylendiaminbisstearylamid als Gleitmittel auf einem 1,3 linnenkneter bei Temperaturen von 160° C bis 200° C compoundiert. Die Formkörper wurden auf einer Spritzgießmaschine bei 240° C hergestellt.

Die Kerbschlagzähigkeit ($a_k$) wurde bei Zimmertemperatur nach DIN 53456 (Einheit kJ/m$^2$) ermittelt; die Streckspannung (σs) durch Zugversuch nach DIN 53455. Die thermoplastische Verarbeitbarkeit wurde durch Messung des notwendigen Fülldruckes bei 240° C (s. F. Johannaber, Kunststoffe 74 (1984), 1, Seiten 2 - 5, charakterisiert.

In Tabelle 1 ist die Zusammensetzung der untersuchten Formmassen, in Tabelle 2 sind die erhaltenen Meßwerte zusammengestellt Gegenüber den Vergleichsversuchen zeigen die erfindungsgemäßen Mischungen gute Zähigkeit und hohe Streckspannung bei sehr guter thermoplastischer Verarbeitbarkeit; Zufügen eines Silikonöls gemäß EP-A 6521 führt zwar zu guter Zähigkeit, Streckspannung und Verarbeitbarkeit nehmen jedoch deutlich ab.

### Tabelle 1: Zusammensetzungen der Formmassen

| Beispiel Nr. | A Gew.-Teile | B1 Gew.-Teile | B2 Gew.-Teile | C1 Gew.-Teile | C2 Gew.-Teile | C3 Gew.-Teile | C4 Gew.-Teile | C5 Gew.-Teile | C6 Gew.-Teile | Silikonöl Gew.-Teile |
|---|---|---|---|---|---|---|---|---|---|---|
| 1 | 80 | 10 | 10 | - | - | 1,1 | - | - | - | - |
| 2 (Vergleich) | 80 | 10 | 10 | - | - | - | - | - | - | - |
| 3 (Vergleich) | 80 | 10 | 10 | - | - | - | - | - | - | 0,1 |
| 4 | 70 | 15 | 15 | 1,5 | - | - | - | - | - | - |
| 5 | 70 | 15 | 15 | 3 | - | - | - | - | - | - |
| 6 | 70 | 15 | 15 | - | 1,5 | - | - | - | - | - |
| 7 | 70 | 15 | 15 | - | - | 0,55 | - | - | - | - |
| 8 | 70 | 15 | 15 | - | - | 1,65 | - | - | - | - |
| 9 | 70 | 15 | 15 | - | - | - | 1,5 | - | - | - |
| 10 | 70 | 15 | 15 | - | - | - | - | 1,5 | - | - |
| 11 | 70 | 15 | 15 | - | - | - | - | - | 1,5 | - |
| 12 (Vergleich) | 70 | 15 | 15 | - | - | - | - | - | - | - |
| 13 (Vergleich) | 70 | 15 | 15 | - | - | - | - | - | - | 0,1 |
| 14 | 60 | 20 | 20 | - | - | 1,1 | - | - | - | - |
| 15 (Vergleich) | 60 | 20 | 20 | - | - | - | - | - | - | - |
| 16 (Vergleich) | 60 | 20 | 20 | - | - | - | - | - | - | 0,1 |

EP 0 412 370 B2

## Tabelle 2: Prüfdaten der Formmassen

| Beispiel Nr. | Kerbschlagzähigkeit $a_k$ bei $20^0$ C [kJ/m²] | Streckspannung ($\sigma s$) [N/mm²] | Fülldruck [bar] |
|---|---|---|---|
| 1 | 4 | 58,5 | 274 |
| 2 (Vergleich) | 4 | 56,1 | 283 |
| 3 (Vergleich) | 5 | 53,2 | 286 |
| 4 | 12,5 | 51,5 | 281 |
| 5 | 13 | 49,0 | 277 |
| 6 | 10 | 50,3 | 299 |
| 7 | 10 | 53,0 | 301 |
| 8 | 10,5 | 52,2 | 295 |
| 9 | 10,5 | 49,4 | 297 |
| 10 | 9,5 | 49,7 | 296 |
| 11 | 10 | 50,6 | 295 |
| 12 (Vergleich) | 9 | 52,8 | 306 |
| 13 (Vergleich) | 11 | 47,3 | 312 |
| 14 | 14,5 | 47,5 | 319 |
| 15 (Vergleich) | 11 | 48,8 | 328 |
| 16 (Vergleich) | 14,5 | 42,8 | 332 |

EP 0 412 370 B2

**Patentansprüche**

1. Thermoplastische Formmassen, enthaltend

A) 5-95 Gew.-% thermoplastisches Homo-, Co- oder Terpolymerisat von Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus
B) 5-95 Gew.-% Pfropfpolymerisat von

B.1) 5-90 Gew.-Teile Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus auf
B.2) 95 - 10 Gew.-Teile eines Dien-Kautschuks und

C) 0,1 - 10 Gew.-Teile pro 100 Gew.-Teile A + B eines oder mehrerer Ethylen-Propylen-Monomer und/oder Ethylen-Propylen-Dien-Monomer-Kautschuke.

2. Formmassen gemäß Anspruch 1, in denen C ein Ethylen-Propylen-Dien-Monomer-Kautschuk mit einem Doppelbindungsgehalt von 4 bis 16 Doppelbindungen pro 1.000 C-Atome ist.

3. Thermoplastische Formmassen, enthaltend

A) 90 - 20 Gew.-% thermoplastisches Harz aus 5 - 40 Gew.-Teile Acrylnitril und 95 - 60 Gew.-Teile Styrol, α-Methylstyrol, p-Methylstyrol, Methylmethacrylat oder Mischungen daraus,
B) 10 - 80 Gew.-% Pfropfpolymerisat von 30 - 80 Gew.-Teilen Styrol, α-Methylstyrol, p-Methylstyrol, Methylmethacrylat, Acrylnitril oder Mischungen daraus auf 70 - 20 Gew.-Teile Polybutadien und
C) 0,5 - 5 Gew.-Teile pro 100 Gew.-Teile A + B eines oder mehrerer Ethylen-Propylen-Dien-Monomer-Kautschuke.

**Claims**

1. Thermoplastic moulding compounds containing

A) 5 to 95% by weight thermoplastic homo-, co- or terpolymer of styrene, α-methyl styrene, nucleus-substituted styrene, methyl methacrylate, acrylonitrile, methacrylonitrile, maleic anhydride, N-substituted maleic imide, vinyl acetate or mixtures thereof
B) 5 to 95% by weight graft polymer of

B.1) 5 to 90 parts by weight styrene, α-methyl styrene, nucleus-substituted styrene, methyl methacrylate, acrylonitrile, methacrylonitrile, maleic anhydride, N-substituted maleic imide, vinyl acetate or mixtures thereof on
B.2) 95 to 10 parts by weight of a diene rubber and

C) 0.1 to 10 parts by weight per 100 parts by weight A + B of one or more ethylene propylene monomer and/ or ethylene/propylene/diene monomer rubbers.

2. Moulding compounds as claimed in claim 1, in which C is an ethylene/propylene/diene monomer rubber containing 4 to 14 double bonds per 1,000 carbon atoms.

3. Thermoplastic moulding compounds containing

A) 90 to 20% by weight thermoplastic resin of 5 to 40 parts by weight acrylonitrile and 95 to 60 parts by weight styrene, α-methyl styrene, p-methyl styrene, methyl methacrylate or mixtures thereof,
B) 10 to 80% by weight graft polymer of 30 to 80 parts by weight styrene, α-methyl styrene, p-methyl styrene, methyl methacrylate, acrylonitrile or mixtures thereof on 70 to 20 parts by weight polybutadiene and
C) 0.5 to 5 parts by weight per 100 parts by weight A + B of one or more ethylene/propylene/diene monomer rubbers.

**Revendications**

1.  Compositions à mouler thermoplastiques, contenant

    A) 5 à 95 % en poids d'homopolymère, de copolymère ou de terpolymère thermoplastique de styrène, d'α-méthylstyrène, de styrène substitué sur le noyau, de méthacrylate de méthyle, d'acrylonitrile, de méthacrylonitrile, d'anhydride d'acide maléique, de maléimide substitué sur l'azote, d'acétate de vinyle ou de mélanges de ces composés,

    B) 5 à 95 % en poids de polymère greffé

    B.1) de 5 à 90 parties en poids de styrène, d'α-méthylstyrène, de styrène substitué sur le noyau, de méthacrylate de méthyle, d'acrylonitrile, de méthacrylonitrile, d'anhydride d'acide maléique, de maléimide substitué sur l'azote, d'acétate de vinyle ou de mélanges de ces composés sur
    B.2) 95 à 10 parties en poids d'un caoutchouc diénique, et

    C) 0,1 à 10 parties en poids, pour 100 parties en poids de A + B, d'un ou plusieurs caoutchoucs éthylène-propylène-monomère ou éthylène-propylène-monomère diénique.

2.  Compositions à mouler suivant la revendication 1, dans lesquelles C est un caoutchouc éthylène-propylène-monomère diénique ayant une teneur de 4 à 16 doubles liaisons pour 1000 atomes de carbone.

3.  Compositions à mouler thermoplastiques, contenant

    A) 90 à 20 % en poids de résine thermoplastique dérivée de 5 à 40 parties en poids d'acrylonitrile et de 95 à 60 parties en poids de styrène, d'α-méthylstyrène, de p-méthylstyrène, de méthacrylate de méthyle ou de mélanges de ces composés,
    B) 10 à 80 % en poids de polymère greffé de 30 à 80 parties en poids de styrène, d'α-méthylstyrène, de p-méthylstyrène, de méthacrylate de méthyle, d'acrylonitrile ou de mélanges de ces composés sur 70 à 20 parties en poids de polybutadiène et
    C) 0,5 à 5 parties en poids, pour 100 parties en poids de A + B, d'un ou plusieurs caoutchoucs éthylène-propylène-monomère diénique.